# EUROPÄISCHE PATENTSCHRIFT

(11) **EP 3 604 031 B1**
(45) Veröffentlichungstag und Bekanntmachung des Hinweises auf die Patenterteilung: **03.03.2021**
(21) Anmeldenummer: 19185880.2
(22) Anmeldetag: 11.07.2019
(51) Int. Cl.: B60N 2/58

(54) **BEZUGSABHEFTUNG ZUR BEFESTIGUNG EINES SITZBEZUGS**
COVER ATTACHMENT FOR ATTACHING A SEAT COVER
ATTACHE DE REVÊTEMENT DESTINÉE À LA FIXATION D'UN REVÊTEMENT DE SIÈGE

(30) Priorität: 01.08.2018 DE 102018212867
(43) Veröffentlichungstag der Anmeldung: 05.02.2020
(73) Patentinhaber: Magna Seating (Germany) GmbH, 63877 Sailauf (DE)
(72) Erfinder: TIEFNIG, Christian, 80797 München (DE); HAAS, Hansjörg, 63589 Linsengericht (DE); KOLLER, Michael, 8552 Eibiswald (AT); JETTER, Martin, 60389 Frankfurt (DE); STURM, Svenja, 86666 Burgheim (DE)
(74) Vertreter: Völger, Silke Beatrix

(56) Entgegenhaltungen:
- EP-A1- 0 222 020
- EP-A1- 3 483 002
- CN-U- 206 107 027
- DE-U1-202015 008 970

## Beschreibung

Die vorliegende Erfindung betrifft eine Bezugsabheftung zur Befestigung eines Sitzbezugs.

Kraftfahrzeugsitzes bestehen im Wesentlichen aus einer ersten mit dem Fahrzeugboden verbundenen Tragstruktur die eine Sitzfläche mit Sitzpolster aufweist sowie eine an der ersten Tragstruktur angebundenen zweiten eine Rückenlehne bildenden zweiten Tragstruktur mit einem Rückenlehnenpolster. Sitzfläche und Rückenlehne sind dabei mit einem Sitzbezug überzogen der entprechend der Kontur der Polsterung angepasst ausgeführt ist. Üblicherweise sind die Sitzbezüge mit Dekornähten versehen.

Der Sitzbezug wird mittels einer sogenannten Bezugsabheftung an die entsprechende erste bzw. zweite Tragstruktur oder an die mit der Tragstruktur verbundene Polsterung d.h. Rückenlehnenpolster bzw. Sitzpolster befestigt. Hierfür werden beispielsweise an den Sitzbezug sogenannte Profile oder Halteleisten - die auch als Retainer bezeichnet werden - befestigt, die dann an entsprechenden in das Polster eingeschäumte Drähte verankert werden können. Hierdurch kann eine von der Sichtseite des Kraftfahrzeugsitzes aus gesehen unsichtbare Festlegung des Sitzbezugs erreicht werden.

Bei den Bezugsabheftungen ist es dabei ein Ziel, dass optische Beeinträchtigungen des Sitzbezugs von der Sichtseite des Sitzbezugs ausgesehen, vermieden werden sollen.

Aus den Dokumenten DE 20 2015 008 970 U1, EP 0 222 020 A1, EP 3 483 002 A1 sowie CN 206 107 027 U sind derartige Bezugsabheftungen zur Befestigung eines Sitzbezugs an eine Tragstruktur eines Kraftfahrzeugsitzes bekannt. Die Bezugsabheftungen umfassen einen Sitzbezug aus einem zweilagigen Bezugsmaterial aus einer Sitzaußenhaut und einer Kaschierung. Der Sitzbezug bildet einen Oberflächenbereich auf der Sichtseite und einen der Sichtseite abgewandten Oberflächenbereich. Auf dem abgewandten Oberflächenbereich ist ein Abheftelement angeordnet.

Es ist eine Aufgabe der vorliegenden Erfindung, eine Bezugsabheftung zur Befestigung eines Sitzbezugs für einen Kraftfahrzeugsitz derart weiterzubilden, dass diese zur Befestigung des Sitzbezugs an ein Polsterelement oder eine Tragstruktur einfach, kostengünstig und mit einer ansprechenden Optik realisierbar ist, wobei optische Beeinträchtigungen auf der Sichtseite des Sitzbezugs vermieden werden sollen.

Diese Aufgabe löst die vorliegende Erfindung durch die im Anspruch 1 angegebenen Merkmale. Bei der erfindungsgemäßen Ausgestaltung umfasst die Bezugsabheftung einen Sitzbezug mit einem Oberflächenbereich auf der Sichtseite und einem der Sichtseite abgewandten Oberflächenbereich, und mindestens einem auf dem abgewandten Oberflächenbereich angeordnetes Abheftelement. Hierdurch ist eine einfache und optisch ansprechende Ausführung der Bezugsabheftung realisierbar. Insbesondere ist das Abheftelement derart an dem Sitzbezug angeordnet, dass es von der Sichtseite aus nicht sichbar ist. Vorteilhafterweise hat die erfindungsgemäße Bezugsabheftung keinen Einfluss auf das Dekor und das sichtbare optische Design des Sitzbezugs.

Unter Bezugabheftung wird eine Heftung bzw. Befestigung eine Sitzbezugs an eine Sitzstruktur oder an eine mit der Sitzstruktur verbundene oder zu verbindende Polsterung verstanden, die dem Fachmann allgemein bekannt ist. Die Bezugsabheftung umfasst dabei vorteilhafterweise einen flexiblen Abheftstreifen, der an seinem freien Endbereich einen Abheftbereich aufweist, der sich an Polsterdrähten verankern lässt. Diese Verankerung erfolgt üblicherweise über sogenannte Hook Ringe.

Vorteilhafte Ausgestaltungen der vorliegenden Erfindung sind in den jeweiligen Unteransprüchen angegeben.

Bevorzugte Ausführungsformen der vorliegenden Erfindung werden nachfolgend beispielshalber beschrieben, wobei auf die anhängenden Zeichnungen Bezug genommen wird. Darin zeigen:
- Fig. 1: eine Ansicht auf eine Rückenlehne eines Kraftfahrzeugsitzes,
- Fig.2: einen perspektivischen Ausschnitt eines Sitzbezugs mit unsichtbarer Bezugsabheftung in einer ersten Ausführungsvariante,
- Fig. 3.: einen perspektivischen Ausschnitt eines Sitzbezugs mit unsichtbarer Bezugsabheftung in einer zweiten Ausführungsvariante; und
- Fig. 4: einen perspektivischen Ausschnitt eines Sitzbezugs mit unsichtbarer Bezugsabheftung in einer dritten Ausführungsvariante.

Ein üblicher Kraftfahrzeugsitz für ein Kraftfahrzeug umfasst eine erste Tragstruktur mit einer daran angeordneten Rückenlehne 1 mit einem Rückenlehnenpolster, ein die Sitzfläche bildendes Sitzpolster und einer zugeordneten zweiten Tragstruktur sowie einer Bodenabstützung. Das Rückenlehnenpolster sowie das Sitzpolster umfassen im Wesentlichen eine Polsterung aus einem Schaum und sind mit einem Sitzbezug 2, der die Sichtseite bildet, überzogen. Als Sitzbezug 2 können unterschiedliche Materialien verwendet werden. Als Materalien werden Stoffe oder Leder verwendet.

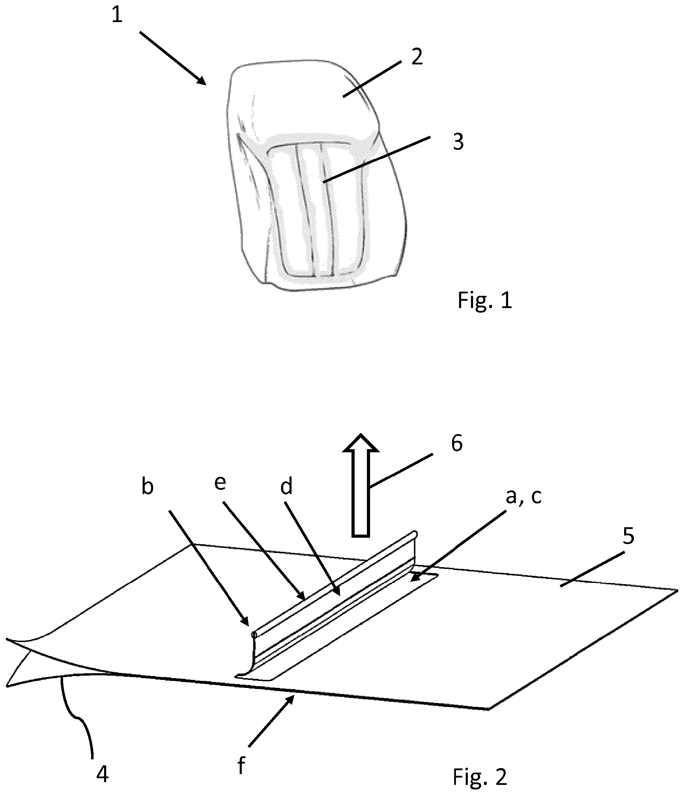

Figur 1 zeigt in einer perspektivischen Darstellung eine gepolsterte Rückenlehne 1 mit formgebenden Nähten 3 an der eine Bezugsabheftung vorgenommen ist, die eine unsichtbare Verankerung des Sitzbezugs an der Tragstruktur bzw. an dem Rückenlehnenpolster der Rückenlehne 1 ermöglicht.

Gemäß der Figur 2 umfasst die Bezugsabheftung einen Sitzbezug 2 der als zweilagige Verbundstruktur ausgeführt ist. Diese zweilagige Verbundstruktur besteht aus einer ersten Schicht, die einen Oberflächenbereich auf der Sichtseite 4 bildet und einer zweiten Schicht, die einem der Sichtseite abgewandten Oberflächenbereich 5 bildet. Oberflächenbereich 4 und 5 (erste und zweite Schicht) sind flächig miteinander verbunden. Oberflächenbereich 4 ist aus einem Ledermaterial ausgeführt, kann in einer anderen Ausführungsform allerdings auch aus einem Kunstleder oder einem Textilmaterial hergestellt sein. Der Oberflächenbereich 5 ist ein textiles Flächengebilde. Die Befestigung ist eine stoffschlüssige Befestigung z.B. eine Klebeverbindung und wird vorzugsweise in einem Laminierverfahren hergestellt. Der die zweite Schicht bildende Oberflächenbereich 5 ist im Bereich a u-förmig eingeschnitten. Hierdurch entsteht ein klappenförmiges Element b, welches ausgehend von dem abgewandten Oberflächenbereich 5 in Richtung auf die zu befestigenden Tragstruktur oder die Polsterung geklappt wird. An dem klappenförmigen Element b ist ein Befestigungselement d, welches auch als Retainer bezeichnet wird, befestigt. Das Befestigungselement d ist wie es eingangs bereits beschrieben ist, ein flexibler Abheftstreifen, der an seinem freien Endbereich einen Abheftbereich, vorzugsweise mit einer Lochung aufweist, der sich an Polsterdrähten verankern lässt. Mittels des Retainers/Befestigungselements d kann nun das Abheftelement e, welches das klappenförmige Element b und das Befestigungselement d umfasst, in Richtung des Pfeils 6 unter Beanspruchung einer Zugkraft an der Tragstruktur oder in entsprechenden Spanndrähten in der Polsterung fixiert werden.

Bei der Herstellung der in der Figur 2 gezeigten erfindungsgemäßen Bezugsabheftung wird vor dem Laminieren der Oberflächenbereiche 4 und 5 in einem ersten Schritt der u-förmige Einschnitt c in den Oberflächenbereich 5 eingebracht.

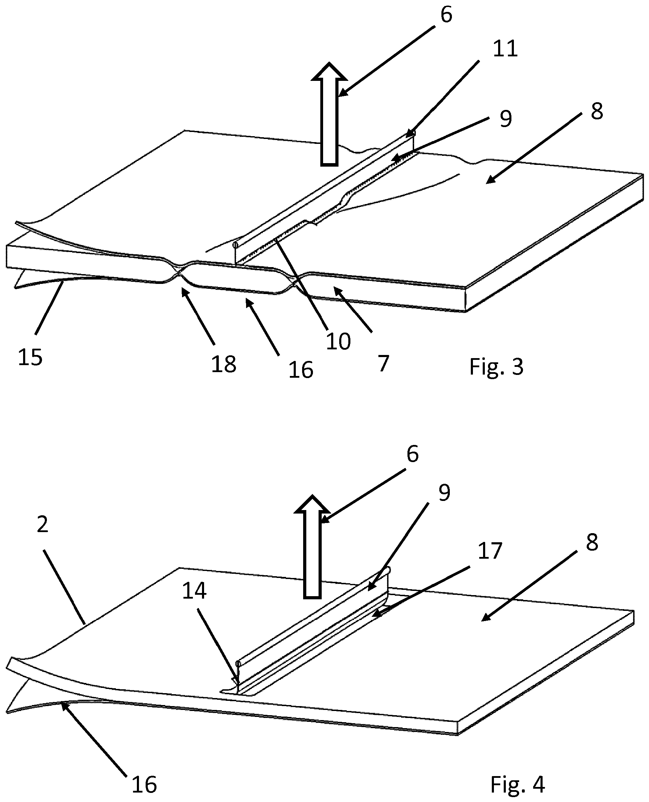

Bei der in der Figur 3 dargestellten Ausführungsvarianten ist der Sitzbezug 2 als dreilagige Verbundstruktur ausgeführt und umfasst eine zweilagige Sitzaußenhaut 16 sowie eine Kaschierung 8 auf dem abgewandten Oberflächenbereich der Sitzaußenhaut 16. Die Sitzaußenhaut 16 besteht dabei aus einer die Sichtseite bildenden Lederschicht 15 und einer Schaumstoffschicht 7. Die Schaumstoffschicht hat dabei eine Dicke von ca. 13 mm. Die beiden Schichten 15 und 7 werden miteinander vernäht, so dass sich eine dekorative Naht 18 auf der Sichtseite ergibt.

Die Kaschierung 8 besteht beispielsweise aus einem Vliesmaterial. An der Kaschierung 8 ist auf dem zur Tragstruktur bzw. der Polsterung weisenden Oberflächenbereich mindestens ein als Befestigungselement 9 angeordnetes Abheftelement befestigt. Das Befestigungselement 9 ist ein sogenannter Retainer und ist ein streifenförmiges Element mit einem ersten und einem zweiten Endbereich 10, 11. Der erste Endbereich 10 ist dabei auf der Kaschierung 8 befestigt. Vorzugsweise erfolgt die Befestigung über eine Schließnaht. Dieser Arbeitsschritt wird durchgeführt, bevor die Sitzaußenhaut 16 und die Kaschierung 8 miteinander verbunden werden. Die Verbindung wird beispielsweise über ein Verkleben in einem Laminierverfahren hergestellt. Der zweite Endbereich 11 dient zur Befestigung an der Tragestruktur, z.B. zum anschießen an den eingeschäumten Spanndrähten in der Polsterung zum Aufbringen einer Zugkraft in Richtung des Pfeils 6.

Bei der in der Figur 4 dargestellten Ausführungsvarianten ist der Sitzbezug 2 als zweilagiges Verbundmaterial ausgeführt und umfasst eine Sitzaußenhaut 16 mit Kaschierung 8 auf dem abgewandten Oberflächenbereich der Sitzaußenhaut 16. Sitzaußenhaut 16 und Kaschierung 8 werden miteinander verklebt. Dies erfolgt üblicherweise in einem Laminierverfahren. Die Kaschierung hat eine Materialdicke von ca. 8mm. Die Kaschierung 8 ist in zumindest einem streifenförmigen Bereich 17 u-förmig eingeschnitten. Hierdurch kann ein streifenförmiges Element 14 der Kaschierung 8 aus der Ebene des Oberflächenbereichs der Kaschierung herausgeklappt werden. An dem streifenförmigen Element 14 ist ein Befestigungselement 9, welches auch als Retainer bezeichnet wird, befestigt. Das Abheftelement umfasst demnach das streifenförmige Element 14 und das Befestigungselement, so dass mittels des Retainers 9 das Abheftelement/streifenförmige Element 14 in Richtung des Pfeils 6 unter Beanspruchung einer Zugkraft an der Tragstruktur oder in entsprechenden Spanndrähten in der Polsterung fixiert werden kann.

## Patentansprüche

1. Bezugsabheftung zur Befestigung eines Sitzbezugs (2) an eine Tragstruktur oder an eine mit der Tragstruktur verbundene oder zu verbindende Polsterung, wobei die Bezugsabheftung einen Sitzbezug (2) mit einem Oberflächenbereich auf der Sichtseite (4) und einem der Sichtseite abgewandten Oberflächenbereich (5), und mindestens einem auf dem abgewandten Oberflächenbereich (5) angeordnetes Abheftelement (e; 9, 14) umfasst, wobei der Sitzbezug (2) ein zweilagiges Verbundmaterial aus einer Sitzaußenaußenhaut (16) mit einer Kaschierung (8) auf dem abgewandten Oberflächenbereich der Sitzaußenhaut (16) umfasst, **dadurch gekennzeichnet, dass** die Kaschierung (8) das Abheftelement bildet und hierfür geschlitzt ausgeführt ist.

2. Bezugsabheftung nach Anspruch 1, **dadurch gekennzeichnet, dass** der Sitzbezug (2) ein dreilagiges Verbundmaterial aus einer Sitzaußenaußenhaut (16) mit einer Kaschierung (8) auf dem abgewandten Oberflächenbereich der Sitzaußenhaut (16) umfasst, wobei die Sitzaußenhaut (16) aus einer ersten die Sichtseite bildenden Schicht (15) und einer Schaumstoffschicht (7) besteht.

3. Bezugsabheftung nach Anspruch 2, **dadurch gekennzeichnet, dass** die erste Schicht (15) mit der Schaumstoffschicht (7) über Nähte miteinander verbunden ist.

## Claims

1. Cover attachment for attaching a seat cover (2) to a support structure or to upholstery that is connected, or to be connected, to the support structure, wherein the cover attachment comprises a seat cover (2) having a surface region on the visible face (4) and a surface region (5) that faces away from the visible face, and at least one tie-down element (e; 9, 14) that is disposed on the surface region (5) that faces away from said visible face, wherein the seat cover (2) comprises a two-ply composite material made from a seat outer shell (16) having a lamination (8) on the surface region of the seat outer shell (16) that faces away from said visible face,
**characterized in that**
the lamination (8) forms the tie-down element and is embodied slotted.

2. Cover attachment according to Claim 1, **characterized in that** the seat cover (2) comprises a three-ply composite material made from a seat outer shell (16) having a lamination (8) on the surface region of the seat outer shell (16) that faces away from the visible face, wherein the seat outer shell (16) is composed of a first layer (15) that forms the visible face and a foam-material layer (7).

3. Cover attachment according to Claim 2, **characterized in that** the first layer (15) and the foam-material layer (7) are connected to each other by seams.

## Revendications

1. Attache de revêtement destinée à la fixation d'un revêtement de siège (2) à une structure porteuse ou à un rembourrage raccordé ou devant être raccordé à la structure porteuse, l'attache de revêtement comprenant un revêtement de siège (2) avec une région de surface sur le côté visible (4) et une région de surface (5) opposée au côté visible, et au moins un élément d'attache (e ; 9, 14) disposé sur la région de surface (5) opposée, le revêtement de siège (2) comprenant un matériau composite à deux couches constitué d'une peau extérieure de siège (16) avec une doublure (8) sur la région de surface opposée de la peau extérieure de siège (16), **caractérisée en ce que** la doublure (8) forme l'élément d'attache et est à cet effet réalisée sous forme fendue.

2. Attache de revêtement selon la revendication 1, **caractérisée en ce que** le revêtement de siège (2) comprend un matériau composite à trois couches constitué d'une peau extérieure de siège (16) avec une doublure (8) sur la région de surface opposée de la peau extérieure de siège (16), la peau extérieure de siège (16) étant constituée d'une première couche (15) formant le côté visible et d'une couche de mousse (7).

3. Attache de revêtement selon la revendication 2, **caractérisée en ce que** la première couche (15) est reliée à la couche de mousse (7) par le biais de coutures.
